# EUROPEAN PATENT APPLICATION

(11) **EP 4 521 797 A1**
(43) Date of publication of application: **12.03.2025**
(21) Application number: 23815081.7
(22) Date of filing: 25.05.2023
(51) Int. Cl.: H04W 12/12, H04W 64/00, H04W 4/14

(54) **COMMUNICATION METHOD AND SYSTEM, AND COMMUNICATION APPARATUS**

(30) Priority: 01.06.2022 CN 202210621213
(71) Applicant: Huawei Technologies Co., Ltd., Shenzhen, Guangdong 518129 (CN)
(72) Inventor: LI, Lun, Shenzhen, Guangdong 518129 (CN); WU, Yizhuang, Shenzhen, Guangdong 518129 (CN); CUI, Yang, Shenzhen, Guangdong 518129 (CN); SUN, Taoran, Shenzhen, Guangdong 518129 (CN)
(74) Representative: Pfenning, Meinig & Partner mbB
(86) International application number: PCT/CN2023/096306
(87) International publication number: WO 2023/231898

(57) **Abstract**

Embodiments of this application provide a communication method, a system, and an apparatus. The method includes: A network device obtains at least one piece of location information based on at least one piece of first information in a plurality of pieces of information, where each piece of information corresponds to at least one terminal, and one piece of first information corresponds to the at least one piece of location information; and the network device determines at least one first location range based on the location information, where a terminal in the first location range receives and sends information abnormally. In embodiments of this application, an area in which the information is abnormally received and sent may be determined by detecting the information by the network device, and information receiving and sending of the terminal in the abnormal area may be further restricted.

## Description

This application claims priority to Chinese Patent Application No. 202210621213.0, filed with the China National Intellectual Property Administration on June 1, 2022 and entitled "COMMUNICATION METHOD, SYSTEM, AND COMMUNICATION APPARATUS", which is incorporated herein by reference in its entirety.

### TECHNICAL FIELD

Embodiments of this application relate to the communication field, and more specifically, to a method, a system, and an apparatus for detecting abnormal information receiving and sending.

### BACKGROUND

A cluster information receiving and sending platform is a device that can receive and send a large quantity of pieces of information by using software. The device is often used in various scenarios in which information is sent and received abnormally. Abnormal information sending and receiving refer to a case in which a terminal needs to receive or send information due to abnormal services, and are characterized in that a quantity of pieces of sent information, sending frequency of a receiver, sent content, and a used sending device do not comply with normal user habits. An attacker deploys the cluster information receiving and sending platform at a fixed location, and then sends a large quantity of pieces of malicious information and/or receives a large quantity of pieces of information from a server to gain profits.

Currently, abnormality handling is mainly identifying and intercepting a spam message by using an application layer detection program, and detecting an abnormal user and analyzing communication information via a network data analytics function (network data analytics function, NWDAF) network element.

However, a short message is used as an example. The application layer detection program cannot be associated with a geographical location at which the short message is sent on a network side, and when performing detection and analysis, the NWDAF network element cannot collect short messages content related to a short message service function (short message service function, SMSF) network element in a 5G network. Consequently, in the conventional technology, an abnormal cluster information receiving and sending platform cannot be effectively detected.

In this case, how to detect abnormal cluster information receiving and sending becomes an urgent problem to be resolved in the industry.

### SUMMARY

Embodiments of this application provide a method, a system, and an apparatus for detecting abnormal information receiving and sending.

According to a first aspect, a communication method is provided, including: A network device obtains at least one piece of location information based on at least one piece of first information in a plurality of pieces of information, where each piece of information corresponds to at least one terminal device, a destination device of each piece of information is a terminal device corresponding to the information, one piece of first information corresponds to at least one piece of location information, and location information corresponding to one piece of first information indicates a location of a destination device of the first information; and the network device determines at least one first location range based on the location information, where a quantity of first terminal devices in the first location range is greater than or equal to a first threshold, where the first terminal device is a terminal device corresponding to the at least one piece of first information; a quantity of pieces of second information in the plurality of pieces of information is greater than or equal to a second threshold, where the second information is information for which a destination device is located in the first location range in the at least one piece of first information; a quantity of pieces of third information in the plurality of pieces of information is greater than or equal to a third threshold, where the third information is information for which a destination device is located in the first location range in the at least one piece of first information, and a length of the third information satisfies a first preset condition; and/or a quantity of second terminal devices in the first location range is greater than or equal to a fourth threshold, where the second terminal device is a destination device of the at least one piece of first information, and a device identifier of the second terminal device satisfies a second preset condition.

In this embodiment of this application, the network device detects the plurality of pieces of information, so that effective detection of abnormal information receiving can be implemented.

With reference to the first aspect, in some implementations of the first aspect, the method further includes: receiving or generating the plurality of pieces of information.

In this embodiment of this application, the plurality of pieces of information are received or generated by the network device, so that an information detection range can be expanded.

In a possible implementation, the network device forwards information sent by a first terminal to a second terminal.

In a possible implementation, the network device generates information and sends the information to the outside.

With reference to the first aspect, in some implementations of the first aspect, the first preset condition includes that lengths of the plurality of pieces of information satisfy a length of a preconfigured value.

In this embodiment of this application, the network device determines a location range by detecting the lengths of the plurality of pieces of information, and a terminal in the location range receives information abnormally.

With reference to the first aspect, in some implementations of the first aspect, the second preset condition includes at least one of the following: all device identifiers are the same, the device identifiers are equally spaced and continuous in an interval, and the device identifiers are repeatedly arranged in the interval.

In this embodiment of this application, the network device determines a location range by detecting the identifiers of devices corresponding to the plurality of pieces of information, and a terminal in the location range receives information abnormally.

With reference to the first aspect, in some implementations of the first aspect, the first information is a part of the plurality of pieces of information.

The network device detects only the part of the plurality of pieces of information, so that an operation amount can be reduced, and detection efficiency can be improved.

In a possible implementation, the first information is information that the destination device is located in a specific area. For example, a second location range is preconfigured in the network device, the destination device of the first information is located in the second location range, the second location range is a location range in which a requester is interested, and reasons for the interest may be as follows: 1. The requester needs to analyze the specified area based on a requirement. 2. The area that needs to be analyzed is large, and analysis is performed in batches. 3. A key area is determined based on big data and an AI algorithm.

In this embodiment of this application, the network device detects only information in the specific area, so that a calculation amount of the network device is reduced and detection efficiency is improved.

With reference to the first aspect, in some implementations of the first aspect, the information includes a short message and information sent by a terminal application, and the information is for verification, notification, marketing, or chatting.

In this embodiment of this application, abnormal receiving of the short message and the information sent by the terminal application can be effectively detected.

For example, the information sent by the terminal application may be information sent by WeChat, or may be a verification code for identity verification during login or registration of a user.

It should be understood that a purpose of the information in this application includes but is not limited to the verification, notification, marketing, or chatting.

With reference to the first aspect, in some implementations of the first aspect, the first information is information whose length is greater than or equal to a fifth threshold in the plurality of pieces of information.

In this embodiment of this application, the network device detects only information whose information length exceeds a specific threshold, so that a calculation amount of the network device is reduced and detection efficiency is improved. In addition, interference of some information is avoided, and detection precision is improved.

With reference to the first aspect, in some implementations of the first aspect, the first information is information that is in the plurality of pieces of information and that is sent by a first application function network element to the destination device.

In this embodiment of this application, the network device detects only information sent by a specific network element, so that a calculation amount of the network device is reduced and detection efficiency is improved.

With reference to the first aspect, in some implementations of the first aspect, the first information is a first type of information in the plurality of pieces of information, the first type is a type of information corresponding to the first application function network element, and one application function network element corresponds to a type of at least one piece of information.

In this embodiment of this application, the network device detects only a specific type of information, so that a calculation amount of the network device is reduced and detection efficiency is improved.

In a possible implementation, the information includes a short message, there is a correspondence between a type of the short message and the application function network element, and one application function network element may correspond to a plurality of types of the short message.

It should be understood that an application function network element (application function, AF) identifier indicates an application function network element that sends a short message. A specific form of the AF identifier is not limited in this application. For example, the AF identifier is an ID of the AF on a network side, or the AF identifier is a number that is configured by a carrier and that is for sending a short message.

For example, a type of a short message corresponding to an application function network element whose identifier is 10690001 is a verification code type, and types of a short message corresponding to an application function network element whose identifier is 10650001 are a verification code type and a marketing type.

With reference to the first aspect, in some implementations of the first aspect, the method further includes: The network device generates alarm information, where the alarm information indicates that abnormality occurs in the first location range; or the network device forbids forwarding a part or all of the plurality of pieces of information to a terminal in the first location range; or the network device forbids sending information to a terminal in the first location range.

In this embodiment of this application, the network device may obtain a location range by detecting the plurality of pieces of information. A terminal in the location range receives information abnormally. Further, the network device may restrict, by using the alarm information, the terminal in the range from receiving the information.

According to a second aspect, a communication method is provided, including: A network device obtains at least one piece of location information based on at least one piece of first information in a plurality of pieces of information, where each piece of information corresponds to at least one terminal device, a sending device of each piece of information is a terminal device corresponding to the information, one piece of first information corresponds to at least one piece of location information, and location information corresponding to one piece of first information indicates a location of a sending device of the first information; and the network device determines at least one first location range based on the location information, where a quantity of first terminal devices in the first location range is greater than or equal to a first threshold, where the first terminal device is a sending device of the at least one piece of first information; a quantity of pieces of second information in the plurality of pieces of information is greater than or equal to a second threshold, where the second information is information for which a sending device is located in the first location range in the at least one piece of first information; a quantity of pieces of third information in the plurality of pieces of information is greater than or equal to a third threshold, where the third information is information for which a sending device is located in the first location range in the at least one piece of first information, and a length of the third information satisfies a first preset condition; and/or a quantity of second terminal devices in the first location range is greater than or equal to a fourth threshold, where the second terminal device is a sending device of the at least one piece of first information, and a device identifier of the second terminal device satisfies a second preset condition.

In this embodiment of this application, the network device detects the plurality of pieces of information, so that effective detection of abnormal information sending can be implemented.

With reference to the second aspect, in some implementations of the second aspect, the method further includes: receiving or generating the plurality of pieces of information.

In this embodiment of this application, the plurality of pieces of information are received or generated by the network device, so that an information detection range can be expanded.

In a possible implementation, the network device forwards information sent by a first terminal to a second terminal.

In a possible implementation, the network device generates information and sends the information to the outside.

With reference to the second aspect, in some implementations of the second aspect, the first preset condition includes that lengths of the plurality of pieces of information satisfy a length of a preconfigured value.

In this embodiment of this application, the network device determines a location range by detecting the lengths of the plurality of pieces of information, and a terminal in the location range sends information abnormally.

With reference to the second aspect, in some implementations of the second aspect, the second preset condition includes at least one of the following: all device identifiers are the same, the device identifiers are equally spaced and continuous in an interval, and the device identifiers are repeatedly arranged in the interval.

In this embodiment of this application, the network device determines a location range by detecting the identifiers of devices corresponding to the plurality of pieces of information, and a terminal in the location range sends information abnormally.

With reference to the second aspect, in some implementations of the second aspect, the first information is a part of the plurality of pieces of information.

The network device detects only the part of the plurality of pieces of information, so that an operation amount can be reduced, and detection efficiency can be improved.

In a possible implementation, the first information is information that the destination device is located in a specific area. For example, a second location range is preconfigured in the network device, the second location range is a location range in which a requester is interested, and reasons for the interest may be as follows: 1. The requester needs to analyze the specified area based on a requirement. 2. The area that needs to be analyzed is large, and analysis is performed in batches. 3. A key area is determined based on big data and an AI algorithm.

In this embodiment of this application, the network device detects only information in the specific area, so that a calculation amount of the network device is reduced and detection efficiency is improved.

With reference to the second aspect, in some implementations of the second aspect, the information includes a short message and information sent by a terminal application, and the information is for verification, notification, marketing, or chatting.

In this embodiment of this application, abnormal sending of the short message and the information sent by the terminal application can be effectively detected.

For example, the information sent by the terminal application may be information sent by WeChat, or may be a verification code for identity verification during login or registration of a user.

It should be understood that a purpose of the information in this application includes but is not limited to the verification, notification, marketing, or chatting.

With reference to the second aspect, in some implementations of the second aspect, the first information is information whose length is greater than or equal to a fifth threshold in the plurality of pieces of information.

In this embodiment of this application, the network device detects only information whose information length exceeds a specific threshold, so that a calculation amount of the network device is reduced and detection efficiency is improved. In addition, interference of some information is avoided, and detection precision is improved.

With reference to the second aspect, in some implementations of the second aspect, the first information is information whose hash value is a first value in the plurality of pieces of information.

In this embodiment of this application, the network device detects only information of specific content, so that a calculation amount of the network device is reduced and detection efficiency is improved. In addition, interference of some information is avoided, and detection precision is improved.

It should be noted that the hash value may be used for describing the content of the information. In this embodiment of this application, the specific content or information with same content is detected. Determining of the specific content is not limited in this application. For example, the specific content may be obtained based on a previous big data material and an AI algorithm about abnormal information.

With reference to the second aspect, in some implementations of the second aspect, the first information is information that a first quantity of times of the sending device is greater than or equal to a sixth threshold and that is in the plurality of pieces of information, and the first quantity of times indicates a quantity of times that the sending device does not receive a reply after sending information.

In this embodiment of this application, the network device detects information for which no response is received due to timeout, so that a calculation amount of the network device is reduced and detection efficiency is improved.

With reference to the second aspect, in some implementations of the second aspect, the method further includes: The network device starts a timer when forwarding the information from the sending device, and if the timer expires and the network device does not receive a submit report, performs accumulation on a counter corresponding to the sending device to obtain the first quantity of times.

In this embodiment of this application, the network device may effectively count a quantity of times that no reply is received after the sending device sends the information. This provides a basis for the network device to detect abnormal information sending.

With reference to the second aspect, in some implementations of the second aspect, the method further includes: The network device generates alarm information, where the alarm information indicates that abnormality occurs in the first location range; or the network device forbids forwarding a part or all of the plurality of pieces of information for a terminal in the first location range; or the network device forbids a terminal in the first location range to send information.

In this embodiment of this application, the network device may obtain a location range by detecting the plurality of pieces of information. A terminal in the location range sends information abnormally. Further, the network device may restrict, by using the alarm information, the terminal in the range from sending the information.

According to a third aspect, a communication system is provided, including a first network device and a second network device. The first network device is configured to send a plurality of pieces of information to the second network device, and each piece of information corresponds to at least one terminal device; the network device obtains at least one piece of location information based on at least one piece of first information in the plurality of pieces of information, where one piece of first information corresponds to at least one piece of location information, and location information corresponding to one piece of first information indicates a location of a terminal device corresponding to the first information; and the network device determines at least one first location range based on the location information, where a quantity of first terminal devices in the first location range is greater than or equal to a first threshold, where the first terminal device is a terminal device corresponding to the at least one piece of first information; a quantity of pieces of second information in the plurality of pieces of information is greater than or equal to a second threshold, where the second information is information for which a terminal device is located in the first location range in the at least one piece of first information; a quantity of pieces of third information in the plurality of pieces of information is greater than or equal to a third threshold, where the third information is information for which a terminal device is located in the first location range in the at least one piece of first information, and a length of the third information satisfies a first preset condition; and/or a quantity of second terminal devices in the first location range is greater than or equal to a fourth threshold, where the second terminal device is a terminal device corresponding to the at least one piece of first information, and a device identifier of the second terminal device satisfies a second preset condition.

This embodiment of this application provides a communication system. The network device in the system detects the plurality of pieces of information, so that effective detection of abnormal information sending can be implemented.

The first preset condition includes that lengths of the plurality of pieces of information satisfy a length of a preconfigured value; and the second preset condition includes at least one of the following: all device identifiers are the same, the device identifiers are equally spaced and continuous in an interval, and the device identifiers are repeatedly arranged in the interval.

With reference to the third aspect, in some implementations of the third aspect, the first network device is further configured to receive or generate the plurality of pieces of information.

In this embodiment of this application, the plurality of pieces of information are received or generated by the network device, so that an information detection range can be expanded.

In a possible implementation, the network device forwards information sent by a first terminal to a second terminal.

In a possible implementation, the network device generates information and sends the information to the outside.

With reference to the third aspect, in some implementations of the third aspect, before the first network device sends the plurality of pieces of information to the second network device, the second network device sends first request information to the first network device, where the first request information is for requesting the plurality of pieces of information from the first network device.

In this embodiment of this application, the second network device may actively request to-be-detected information from the first network device, so that detection flexibility is improved.

With reference to the third aspect, in some implementations of the third aspect, before the second network device sends the first request information to the first network device, the second network device receives second request information, where the second request information is for requesting the second network device to determine the first location range; and the second request information includes a second type and/or a second location range.

In this embodiment of this application, the second network device receives the second request information, where the second request information defines a to-be-detected area and an information type. This can reduce a quantity of pieces of information detected by the second network device, improve detection efficiency, and eliminate some interference information, so that detection accuracy is improved.

The second type indicates, to the second network device, the type of information that needs to be detected, and the second location range indicates, to the second network device, an area that needs to be detected. The second information and the second location range can greatly reduce a detection amount of the second network device, and improve detection efficiency.

For example, the second location range is a location range in which a requester is interested, and reasons for the interest may be as follows: 1. The requester needs to analyze a specified area based on a requirement. 2. The area that needs to be analyzed is large, and analysis is performed in batches. 3. A key area is determined based on big data and an AI algorithm.

The second type is a type of information that the requester is interested in, and reasons for the interest may be as follows: 1. The requester needs to analyze a specified short message type based on a requirement. 2. A large quantity of short messages need to be analyzed in batches. 3. A key type is determined based on big data and an AI algorithm.

According to a fourth aspect, a communication apparatus is provided, including a processing module, configured to obtain at least one piece of location information based on at least one piece of first information in a plurality of pieces of information, where each piece of information corresponds to at least one terminal, a destination terminal of each piece of information is a terminal corresponding to the information, one piece of first information corresponds to at least one piece of location information, and location information corresponding to one piece of first information indicates a location of a destination device of the first information. The processing module is further configured to determine at least one first location range based on the location information, where a quantity of first terminal devices in the first location range is greater than or equal to a first threshold, where the first terminal device is a terminal device corresponding to the at least one piece of first information; a quantity of pieces of second information in the plurality of pieces of information is greater than or equal to a second threshold, where the second information is information for which a destination device is located in the first location range in the at least one piece of first information; a quantity of pieces of third information in the plurality of pieces of information is greater than or equal to a third threshold, where the third information is information for which a destination device is located in the first location range in the at least one piece of first information, and a length of the third information satisfies a first preset condition; and/or a quantity of second terminal devices in the first location range is greater than or equal to a fourth threshold, where the second terminal device is a destination device of the at least one piece of first information, and a device identifier of the second terminal device satisfies a second preset condition.

This embodiment of this application provides a communication apparatus. The apparatus may detect the plurality of pieces of information and determine a location range, so that effective detection of abnormal information receiving can be implemented.

With reference to the fourth aspect, in some implementations of the fourth aspect, the apparatus further includes a transceiver module, and the transceiver module is configured to receive the plurality of pieces of information.

In a possible implementation, a network device forwards information sent by a first terminal to a second terminal.

With reference to the fourth aspect, in some implementations of the fourth aspect, the processing module is further configured to generate the plurality of pieces of information.

In a possible implementation, the network device generates information and sends the information to the outside.

According to a fifth aspect, a communication apparatus is provided, including a processing module, configured to obtain at least one piece of location information based on at least one of a plurality of pieces of information, where each piece of information corresponds to at least one terminal, a sending terminal of each piece of information is a terminal corresponding to the information, one piece of information corresponds to the at least one piece of location information, and location information corresponding to the one piece of information indicates a location of a sending device of the information. The processing module is further configured to determine at least one first location range based on the location information, where a quantity of first terminal devices in the first location range is greater than or equal to a first threshold, where the first terminal device is a destination device of the at least one piece of first information; a quantity of pieces of second information in the plurality of pieces of information is greater than or equal to a second threshold, where the second information is information for which a destination device is located in the first location range in the at least one piece of first information; a quantity of pieces of third information in the plurality of pieces of information is greater than or equal to a third threshold, where the third information is information for which a destination device is located in the first location range in the at least one piece of first information, and a length of the third information satisfies a first preset condition; and/or a quantity of second terminal devices in the first location range is greater than or equal to a fourth threshold, where the second terminal device is a destination device of the at least one piece of first information, and a device identifier of the second terminal device satisfies a second preset condition.

This embodiment of this application provides a communication apparatus. The apparatus may detect the plurality of pieces of information, so that effective detection of abnormal information sending can be implemented.

With reference to the fifth aspect, in some implementations of the fifth aspect, the apparatus further includes a transceiver module, and the transceiver module is configured to receive the plurality of pieces of information.

In a possible implementation, a network device forwards information sent by a first terminal to a second terminal.

With reference to the fifth aspect, in some implementations of the fifth aspect, the processing module is further configured to generate the plurality of pieces of information.

In a possible implementation, the network device generates information and sends the information to the outside.

According to a sixth aspect, a communication apparatus is provided, including a processor, configured to execute a computer program stored in a memory, to enable the communication apparatus to perform the communication method according to the first aspect and the second aspect.

According to a seventh aspect, a computer-readable storage medium is provided, where the computer-readable storage medium stores a computer program, and when the computer program is run on a computer, the computer is enabled to perform the communication method according to the first aspect and the second aspect.

According to an eighth aspect, a chip system is provided, including a processor, configured to invoke a computer program from a memory and run the computer program, to enable a communication device in which the chip system is installed to perform the communication method according to the first aspect and the second aspect.

### BRIEF DESCRIPTION OF DRAWINGS

FIG. 1 is a diagram of an application scenario according to an embodiment of this application;
FIG. 2 is a flowchart according to an embodiment of this application;
FIG. 3A and FIG. 3B are a schematic flowchart of cluster abnormality detection according to an embodiment of this application;
FIG. 4 is a schematic flowchart of cluster abnormality detection according to an embodiment of this application;
FIG. 5 is a schematic flowchart of cluster abnormality detection according to an embodiment of this application;
FIG. 6 is a schematic flowchart of triggering a short message by an AF according to an embodiment of this application;
FIG. 7 is a schematic flowchart of sending a downlink short message according to an embodiment of this application; and
FIG. 8 is a diagram of a communication apparatus 10 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a fixed-mobile convergence network system, or a future 6th generation (6th generation, 6G) system.

The terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The network device in embodiments of this application may be a device configured to communicate with a terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a 5G network, a network device in a future evolved PLMN network, or the like. This is not limited in embodiments of this application.

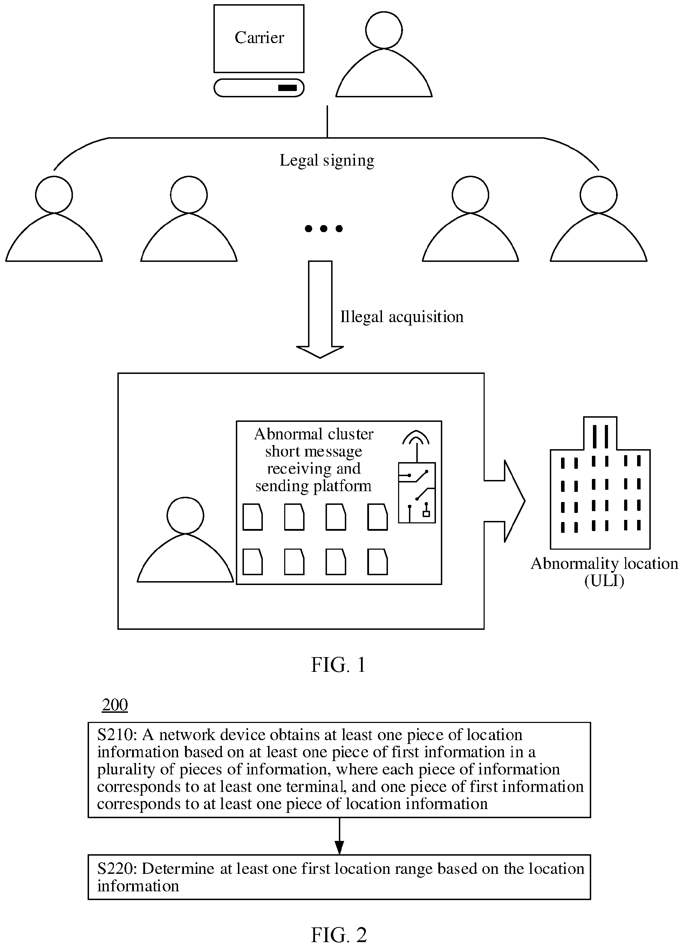

FIG. 1 is a diagram of an application scenario according to an embodiment of this application. Embodiments of this application are applied to various scenarios in which information is sent and received abnormally. A common scenario is abnormal receiving and sending of short messages. For ease of description, the abnormal receiving and sending of the short messages is used as an example for description in this application. It should be understood that a specific form of the information is not limited in this application.

In this embodiment of this application, a location at which the short messages are received and sent abnormally can be detected. A cluster short message receiving and sending platform is deployed at the location at which the short messages are received and sent abnormally. The cluster short message receiving and sending platform refers to user equipment (user equipment, UE) that can control receiving and sending of short messages in batches by using software. Specifically, the cluster short message receiving and sending platform refers to a device that has a communication module, can receive and send short messages, and supports use of a plurality of mobile phone cards. The cluster short message receiving and sending platform can receive or send a large quantity of short messages by using a program.

An attacker usually illegally obtains a large quantity of mobile phone cards legally contracted between users and a carrier, then deploys a cluster device at a fixed location, and starts to receive or send short messages.

The attacker usually initiates, via the cluster device, two types of short message receiving and sending operations that are abnormal for normal network user behaviors: abnormal sending and abnormal receiving.

The abnormal sending refers to abnormal group sending of short messages, and is common in abnormal malicious short messages. Usually, the abnormal malicious short messages are sent to a large quantity of mobile phone numbers. Generally, content is "phishing" websites or remittance instructions. An ultimate purpose is to steal information or money of authorized users.

The abnormal receiving refers to frequently and abnormally receiving a large quantity of pieces of information such as verification codes sent from a server, and the information is illegally sold to other persons after being received. The verification codes are often used in a criminal industry. This platform is a "receiving verification code platform". Recent researches show that some malicious attackers can gain profits by receiving the verification codes for other persons. Sold message combinations of the verification codes and the mobile phone numbers can be used by other attackers for malicious behaviors. The "receiving verification code platform" is a part of a current criminal industry chain, and the sale of the verification codes can be for generating illegal accounts, laundering money, and the like. Currently, almost all existing abnormal "receiving verification code platforms" are deployed by using cluster devices. According to some existing abnormality detection rules, a mobile phone number usually cannot obtain verification codes continuously. In this case, the attackers obtain a large quantity of verification codes by using the cluster devices and notify subsequent criminal industry parts of a combination of the verification codes and mobile phone numbers, to implement malicious activities in a network. Currently, for all information such as verification codes, short messages are delivered based on triggering of an AF network element. For example, in China, most verification code short messages are delivered by using number segments such as "1065" and "1069". Senders of these numbers can be considered as special AFs, and send the short messages by triggering a short message service-service center (short message service-service center, SMS-SC).

In embodiments of this application, an abnormal cluster short message receiving and sending behavior in the network is comprehensively identified on a network side by using information such as access information, a short message type, and a sending manner, and an access location of an abnormal cluster short message receiving and sending platform is identified.

FIG. 2 is a flowchart according to an embodiment of this application.

S210: A network device obtains at least one piece of location information based on at least one piece of first information in a plurality of pieces of information, where each piece of information corresponds to at least one terminal, and one piece of first information corresponds to at least one piece of location information. For example, the plurality of pieces of information includes a short message and information sent by a terminal application, and the information is for verification, notification, marketing, or chatting.

It should be noted that, for ease of description, the short message is used as an example for description in this embodiment of this application. It should be understood that this is not limited in this application.

In a possible implementation, each piece of information includes a short message sent by an AF to a user, and a destination device of each piece of information is a device used by a terminal corresponding to the information.

In another possible implementation, each piece of information includes a short message sent by a first terminal to a second terminal, where a sending device is a device used by the first terminal, and a destination device is a device used by the second terminal.

The first information is a part of the plurality of pieces of information, and detection of all information is avoided by screening out the first information, so that a calculation amount of the network device can be effectively reduced, and detection efficiency can be improved.

For example, the first information includes a screened first short message.

In a possible implementation, at least one suspicious location range is preconfigured in the network device, a receiver of a short message in the first information is located in the suspicious location range, and the network device may exclude a first short message whose receiver is not in the suspicious location range.

It should be noted that a source and a basis of the suspicious location range are not limited in this embodiment of this application. For example, the suspicious location range is a location range in which a requester is interested, and reasons for the interest may be as follows: 1. The requester needs to analyze a specified area based on a requirement. 2. The area that needs to be analyzed is large, and analysis is performed in batches. 3. A key area is determined based on big data and an AI algorithm.

In a possible implementation, the network device presets information about a length of the short message, where a length of the short message in the first information is greater than or equal to the preset length of the short message. The network device excludes a first short message whose length is less than the preset length of the short message.

In a possible implementation, the network device obtains an identifier of an AF that sends the first short message, the network device is preconfigured with at least one second identifier, a sender of the short message in the first information is an AF corresponding to the second identifier, and the network device excludes a first short message whose AF identifier is different from the second identifier.

The AF identifier indicates an AF that sends a short message. A specific form of the AF identifier is not limited in this application. For example, the AF identifier is an ID of the AF on a network side, or the AF identifier is a number that is configured by a carrier and that is for sending a short message.

It should be noted that, in this embodiment of this application, it is a common technical means in this field that the network device obtains the AF identifier corresponding to the first short message. For example, the network device obtains the corresponding AF identifier by sending the first short message and a subscription permanent identifier (subscription permanent identifier, SUPI) of a receiver of the first short message to a short message service-service center (short message service-service center, SMS-SC) network element. A specific implementation process is not described in this embodiment of this application.

In a possible implementation, the plurality of pieces of information include short message type information, the short message type information indicates a short message type, and the short message type includes a verification code type, a marketing type, and the like. There is a correspondence between identification information of the short message and the AF identifier, and one AF identifier may correspond to a plurality of short message types.

The network device obtains the identifier of the AF that sends the first short message. The network device determines a short message type based on the AF identifier. The network device is preconfigured with at least one second type, a type of the short message in the first information is the second type, and the network device excludes a first short message whose short message type is different from the second type.

For example, the first information includes a screened second short message.

In a possible implementation, at least one suspicious location range is preconfigured in the network device, a sender of a short message in the first information is in the suspicious location range, and the network device may exclude a second short message whose sender is not in the suspicious location range.

It should be noted that a source and a basis of the suspicious location range are not limited in this embodiment of this application. For example, the suspicious location range is a location range in which a requester is interested, and reasons for the interest may be as follows: 1. The requester needs to analyze a specified area based on a requirement. 2. The area that needs to be analyzed is large, and analysis is performed in batches. 3. A key area is determined based on big data and an AI algorithm.

In a possible implementation, the network device presets information about a length of the short message, where a length of the short message in the first information is greater than or equal to the preset length of the short message. The network device excludes a second short message whose length is less than the preset length of the short message.

In a possible implementation, the network device obtains a hash value of the second short message, the network device is preconfigured with at least one first value, a hash value of the short message in the first information is the first value, and the network device excludes a second short message whose hash value is different from the first value.

S220: The network device determines at least one first location range based on the location information.

In this embodiment of this application, if the first short message is a short message sent by the AF to the user, the plurality of pieces of information further include at least one of identification information of the first short message, identification information of a terminal that receives the first short message, device identification information of the terminal that receives the first short message, or the length of the first short message. For example, the identification information may be an SUPI, and the device identification information may be a unique identifier of an operating system of a mobile device (for example, an activation information identifier series number of the operating system of the mobile device), may be an international mobile equipment identity (international mobile equipment identity, IMEI), or may be an international mobile equipment identity software version (international mobile equipment identity software version, IMEISV).

It should be noted that the identification information of the short message refers to identification information that can uniquely indicate the short message. For example, the identification information of the short message may include but is not limited to any information that can identify the short message, such as {Short message/Short message ID identifier/Short message sending time and short message sending object}.

In this embodiment of this application, the network device determines the at least one first location range based on the location information. A quantity of first terminals in the first location range is greater than or equal to a first threshold, where the first terminal is a terminal corresponding to at least one of the plurality of pieces of information; a quantity of pieces of first information in the plurality of pieces of information is greater than or equal to a second threshold, where the first information is information for which a destination device is located in the first location range in the plurality of pieces of information; a quantity of pieces of third information in the plurality of pieces of information is greater than or equal to a third threshold, where the third information is information for which a destination device is located in the first location range in the at least one piece of first information, and a length of the third information satisfies a first preset condition; and/or a quantity of first devices in the first location range is greater than or equal to a third threshold, where the first device is a destination device of the at least one of the plurality of pieces of information, a device identifier of the first device satisfies a second preset condition, and the destination device is a device used by a terminal corresponding to the information.

For example, the first preset condition may be that lengths of the plurality of pieces of information satisfy a length of a preconfigured value.

For example, the second preset condition may be at least one of the following: all device identifiers are the same, the device identifiers are equally spaced and continuous in an interval, and the device identifiers are repeatedly arranged in the interval.

In this embodiment of this application, if the second short message is a short message sent by a terminal to another terminal, the first information further includes at least one of identification information of the second short message, identification information of a user that sends the second short message, device identification information of the user that sends the second short message, and the hash value of the second short message. For example, the identification information may be an SUPI, and the device identification information may be a unique identifier of an operating system of a mobile device (for example, an activation information identifier series number of the operating system of the mobile device), may be an IMEI, or may be an IMEISV.

It should be noted that the identification information of the short message refers to identification information that can uniquely indicate the short message. For example, the identification information of the short message may include but is not limited to any information that can uniquely identify the short message, such as {Short message/Short message ID identifier/Short message sending time and short message sending object}.

In this embodiment of this application, the network device determines the at least one first location range based on the location information. A quantity of first terminals in the first location range is greater than or equal to a first threshold, where the first terminal is a terminal corresponding to at least one of the plurality of pieces of information; a quantity of pieces of first information in the plurality of pieces of information is greater than or equal to a second threshold, where the first information is information for which a terminal is located in the first location range in the plurality of pieces of information; a quantity of pieces of third information in the plurality of pieces of information is greater than or equal to a third threshold, where the third information is information for which a destination device is located in the first location range in the at least one piece of first information, and a length of the third information satisfies a first preset condition; and/or a quantity of first devices in the first location range is greater than or equal to a third threshold, where the first device is a sending device of the at least one of the plurality of pieces of information, and a device identifier of the first device satisfies a second preset condition.

For example, the first preset condition may be that lengths of the plurality of pieces of information satisfy a length of a preconfigured value.

For example, the second preset condition may be at least one of the following: all device identifiers are the same, the device identifiers are equally spaced and continuous in an interval, and the device identifiers are repeatedly arranged in the interval.

It should be understood that the network device in this embodiment of this application may be a system including a plurality of network devices that can implement the foregoing functions. For example, the network device integrates an SMSF network element and a security analysis network element. The security analysis network element may be a network data analytics function (network data analytics function, NWDAF) network element. The SMSF network element obtains at least one short message and sends at least one piece of first information to the NWDAF network element, where the first information is related information about the at least one short message. The NWADAF network element determines abnormal user location information based on the first information, and sends an analysis result to the SMSF network element.

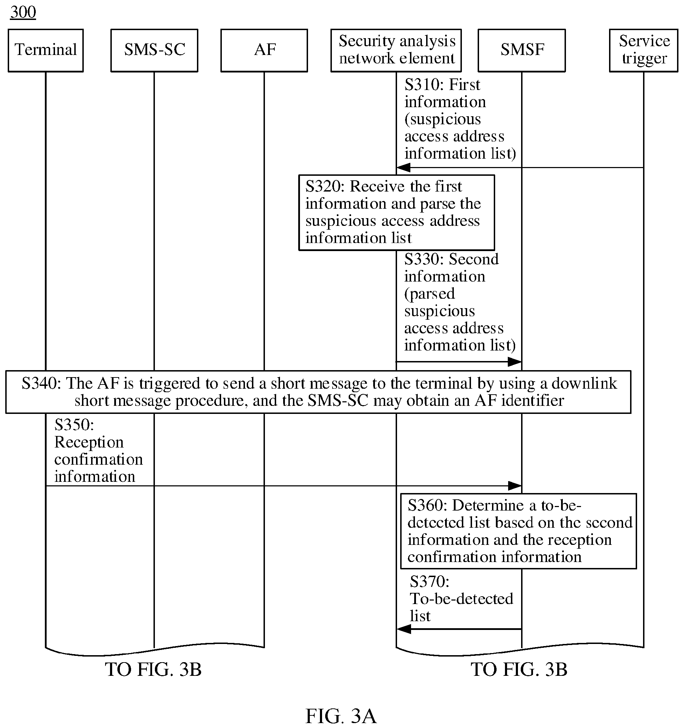

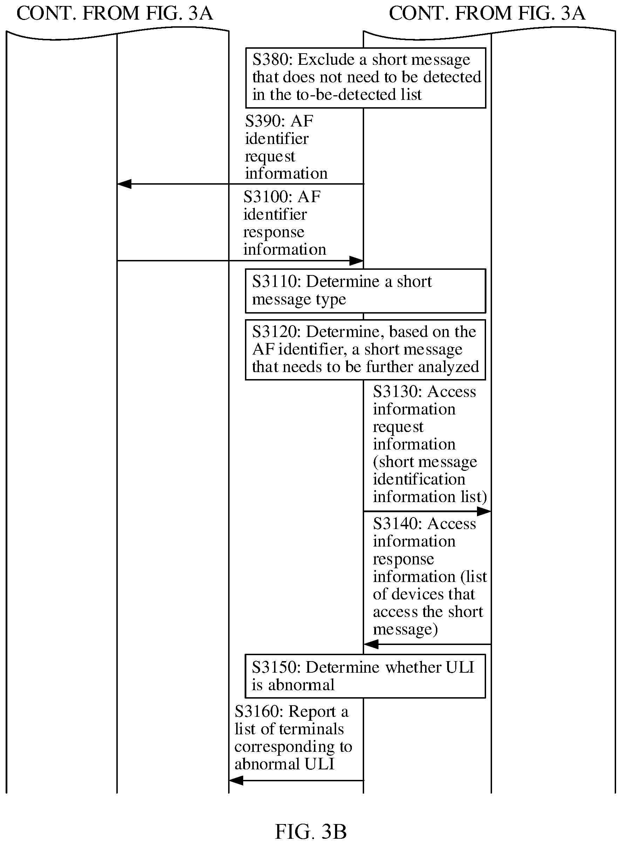

FIG. 3A and FIG. 3B are a schematic flowchart of cluster abnormality detection according to an embodiment of this application. It should be understood that, for ease of description, detected information in this embodiment of this application is a short message, and a form of the detected information is not limited in this application.

S310: A service trigger sends first information to a security analysis network element, where the first information includes a suspicious access address information list.

In a possible implementation, the first information further includes a short message type, and the short message type refers to a description or an identifier of a short message content type. For example, if the short message content type is a verification code type, the short message type corresponds to 1; or if the short message content type is a marketing type, the short message type corresponds to 2.

In a possible implementation, the first information further includes reporting rule information, and the reporting rule information indicates a manner of reporting a detection result by the security analysis network element.

For example, the reporting rule information indicates that the security analysis network element reports the detection result at intervals of a first time period.

For example, the reporting rule information indicates that the security analysis network element reports the detection result each time the security analysis network element detects a first quantity of pieces of abnormal information.

Suspicious access address information refers to a location at which a cluster abnormality probability is high. A manner of determining the suspicious access address information is not limited in this application. In a possible implementation, the suspicious access address information is obtained by performing big data analysis on a large quantity of pieces of past cluster abnormality access address information.

The access address information may be user location information (user location information, ULI), may be specific global positioning system (global positioning system, GPS) coordinates, or may be information such as a cell identifier (CELL ID) or a location area code (location area code, LAC). This is not limited in this application because a form in which an AF, serving as an application layer network element, sends the location information is flexible.

S320: The security analysis network element receives the first information and parses the first information to obtain a parsed suspicious address information list, where parsed suspicious address information is information that can be identified by a network element in a communication network.

S330: The security analysis network element sends second information to an SMSF, where the second information includes the parsed suspicious address information list.

In a possible implementation, if a mapping relationship between the short message type and the short message content type is configured in the SMSF, the second information further includes the short message type.

In a possible implementation, the second information further includes an LAC.

In a possible implementation, the second information further includes a cell identifier.

S340: The AF is triggered to send the short message to a terminal by using a downlink short message procedure, and an SMS-SC may obtain an AF identifier.

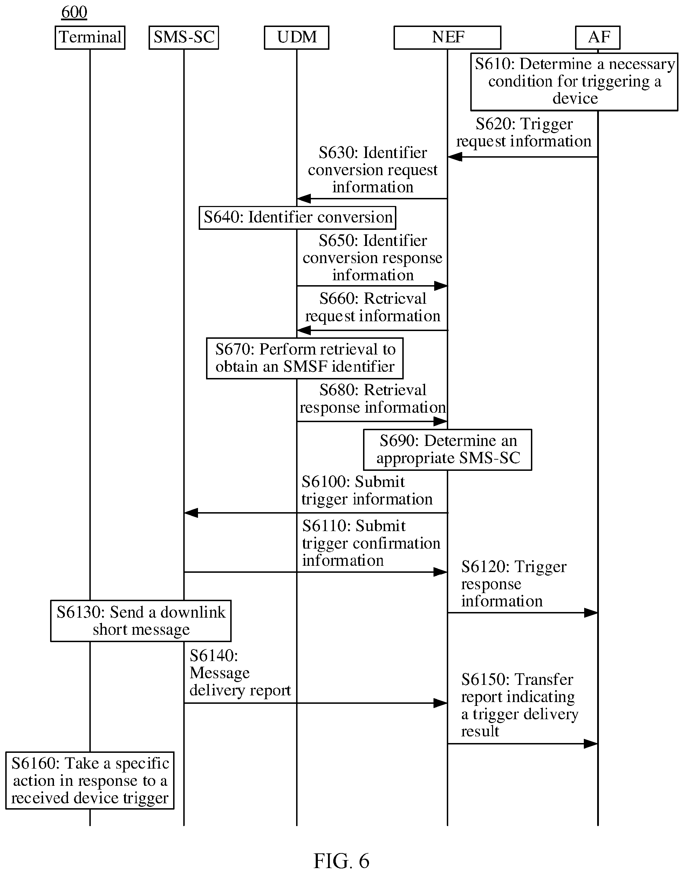

Specifically, a procedure of triggering the short message by the AF is shown in FIG. 6.

S350: After receiving the short message, the terminal sends reception confirmation information to the SMSF, where the reception confirmation information includes an identity of the terminal and ULI.

S360: The SMSF determines, based on the second information and the reception confirmation information, whether to record information about the short message associated with the reception confirmation information and generate a to-be-detected list.

Specifically, if the suspicious address information list in the second information includes the ULI in the reception confirmation information, the SMSF records the information about the short message associated with the reception confirmation information, and places, in the to-be-detected list, the information about the short message associated with the reception confirmation information; or if the suspicious address information list in the second information does not include the ULI in the reception confirmation information, the SMSF does not record the information about the short message associated with the reception confirmation information.

It should be noted that the to-be-detected list includes the ULI, the identity of the terminal, and identification information of the short message.

In a possible implementation, the to-be-detected list further includes a length of the short message.

S370: The SMSF sends the to-be-detected list to the security analysis network element, where the to-be-detected list includes the ULI, the identity of the terminal, and the identification information of the short message.

In a possible implementation, the to-be-detected list further includes the length of the short message. The security analysis network element may exclude, by using the length of the short message, some short and repeated normal short messages often sent by a common terminal, such as "good", "TD", and "OK", to prevent misjudgment and improve detection accuracy.

**Table 1**

| ULI | Short message identifier | Received terminal identifier | Length | Length dispersion |
|---|---|---|---|---|
| ULI1 | SMS-1 | SUPI1 | 21 | Variance 1 |
| | SMS-2 | SUPI2 | 22 | |
| | SMS-3 | SUPI2 | 100 | |
| | SMS-4 | SUPI2 | 22 | |
| ULI2 | SMS-5 | SUPI2 | 12 | Variance 2 |
| | SMS-6 | SUPI2 | 12 | |
| ... | ... | ... | ... | ... |

In a possible implementation, the to-be-detected list further includes short message length dispersion, and the security analysis network element may determine, by using the short message length dispersion, a similarity between short messages corresponding to same ULI. For example, the to-be-detected list is shown in Table 1.

It should be noted that the identification information of the short message in this application is an identifier that can uniquely indicate the short message. Specific content of identification information of the short message is not limited in this embodiment of this application. For example, the identification information of the short message includes at least one of the short message, a short message ID identifier, short message sending time, and a short message sending object.

It should be noted that a manner in which the SMSF sends the to-be-detected list to the security analysis network element is not limited in this embodiment of this application.

In a possible implementation, the SMSF sends the to-be-detected list to the security analysis network element according to a preset rule.

For example, the SMSF sends the to-be-detected list to the security analysis network element at intervals, or the SMSF sends the to-be-detected list to the security analysis network element when recording a specific amount of data.

Optionally, in S380, after receiving the to-be-detected list, the security analysis network element excludes a short message that does not need to be detected.

In a possible implementation, the security analysis network element excludes, based on subscription information in a unified data management (unified data management, UDM) network element, the short message that does not need to be detected. For example, if the subscription information in the UDM is displayed as a high priority, a short message whose sending target is the user terminal is not detected.

In a possible implementation, the security analysis network element excludes, based on the length of the short message, the short message that does not need to be detected. For example, if the length of the short message is less than a specific threshold, the short message is not detected.

S390: The security analysis network element sends AF identifier request information to the SMS-SC, where the AF identifier request information includes an SUPI and the identification information of the short message.

S3100: The SMS-SC sends AF identifier response information to the security analysis network element, where the AF identifier response information includes the identification information of the short message and the AF identifier.

It should be noted that, if the short message is not triggered by the AF, the SMS-SC notifies the security analysis network element of the information, and if the security analysis network element receives the notification, the short message is not detected.

Optionally, in S3110, the security analysis network element determines the short message type.

In a possible implementation, the security analysis network element sends short message type request information to a corresponding AF based on the AF identifier, where the short message type request information includes the identification information of the short message and the SUPI. The AF sends short message type response information to the security analysis network element, where the short message type response information includes the short message type.

For example, as shown in Table 2, a table that is configured by a carrier or preconfigured by an application layer may be configured for the AF, corresponding to the short message type and the AF identifier. If one AF identifier corresponds to a plurality of short message types, the short message is identified as the plurality of short message types.

In a possible implementation, the security analysis network element obtains an AF type from the UDM based on the AF identifier, and the security analysis network element determines the short message type based on the AF type.

**Table 2**

| AF identifier | Short message type | Type description |
|---|---|---|
| 10690001 | 1 | Verification code type |
| 10650001 | 1 and 2 | Verification code type and marketing type |

S3120: The security analysis network element determines, based on the AF identifier, a short message that needs to be further analyzed.

In a possible implementation, the security analysis network element determines, based on the AF identifier and the short message type, the short message that needs to be further analyzed.

For example, it is assumed that all collected short messages are of the verification code type, and all verification codes are sent based on triggering of the AF. If a short message does not have an AF identifier, it indicates that the short message is not triggered by the AF, and the short message does not need to be detected. According to this, the short message that does not need to be detected may be further excluded.

S3130: The security analysis network element sends access information request information to the SMSF based on the short message that needs to be further analyzed, where the access information request information is for requesting access information of each short message receiver, and the access information request information includes a short message identification information list.

In a possible implementation, the access information request information further includes an SUPI list.

S3140: The SMSF sends access information response information to the security analysis network element, where the access information response information includes a list of devices used when each short message is received, for example, an IMEISV list.

It should be noted that, in S3130 and S3140, the security analysis network element obtains the access information of each short message receiver via the SMSF. Actually, the security analysis network element may alternatively obtain the access information of each short message receiver via a session management network element (session management function, SMF). Steps in an obtaining process are the same as the foregoing steps, and details are not described in this embodiment of this application.

S3150: The security analysis network element further determines, by determining a quantity of occurrences of a same terminal, a total quantity of short message in lists, regularity of identifiers of devices used by terminals, and short message length dispersion in all short messages that need to be detected in the ULI, whether the terminal in an area of the ULI sends a short message abnormally.

The identifiers of the devices used by the terminals may be an IMEI, an IMEISV, or an activation information identifier of an operating system of a mobile device. The regularity of the identifiers of the devices used by the terminals may refer to at least one of the following: all device identifiers are the same, the device identifiers are equally spaced and continuous in an interval, and the device identifiers are repeatedly arranged in the interval.

S3160: The security analysis network element reports, to the AF, a list of terminals that send short messages abnormally at the address of the ULI, where content includes but is not limited to the ULI and an SUPI list.

In a possible implementation, the reported content further includes a short message identifier list.

In another possible implementation, the reported content further includes the AF identifier, where the AF identifier is an identifier of the AF triggering the short message.

It should be noted that a condition for triggering the security analysis network element to perform reporting is not limited in this embodiment of this application.

In a possible implementation, the trigger condition is preconfigured in the security analysis network element. For example, the security analysis network element periodically performs reporting. Alternatively, a reporting action is triggered when a quantity of short messages that need to be reported and that are detected by the security analysis network element exceeds a specific quantity.

In this embodiment of this application, the security analysis network element detects an abnormal short message in an existing mode in which an NWDAF network element collects data. First, the service trigger delivers a detection requirement. After parsing, the security analysis network element collects information directly related to the short message from the SMSF, obtains the AF identifier from the SMS-SC, determines the short message type, and obtains access information and an IMEISV of a short message receiving terminal from an access and mobility management network element (access and mobility management function, AMF)/the SMSF. According to this embodiment of this application, whether an abnormal cluster short message receiving platform exists at a specified location can be identified and detected.

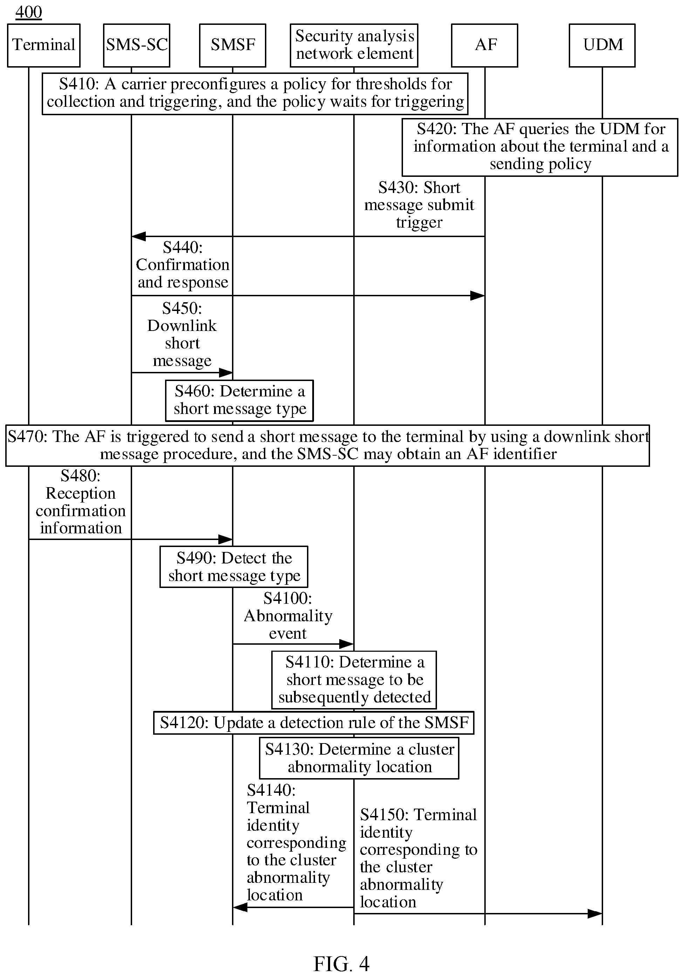

FIG. 4 is a schematic flowchart of cluster abnormality detection according to an embodiment of this application. It should be understood that, for ease of description, detected information in this embodiment of this application is a short message, and a specific form of the information is not limited in this application.

S410: A carrier preconfigures, for an SMSF, an SMS-SC, and a security analysis network element, a policy for thresholds for collection and triggering, and the policy waits for triggering. The threshold is a threshold for triggering reporting, and how to specifically configure the policy is not within the discussion scope of this application.

S420: An AF queries a UDM for information about a terminal and a sending policy.

S430: The AF sends a short message submit trigger (submit trigger) to the SMS-SC, where the short message submit trigger includes an identity of the terminal, an SUPI, and an AF identifier.

In a possible implementation, the short message submit trigger further includes a short message type identifier, and a short message type indicates a specific type of the short message, for example, a verification code type, a marketing type, or a notification type.

S440: The SMS-SC sends a reply to the AF as a response.

S450: The SMS-SC sends a downlink short message to the SMSF, where the downlink short message includes the short message, information about a target terminal, and the AF identifier.

In a possible implementation, the SMS-SC sends the downlink short message to the SMSF, and the downlink short message further includes the short message type identifier. It should be noted that the short message type identifier may be sent by the AF to the SMS-SC, or may be preconfigured in the SMS-SC. This is not limited in this application.

Optionally, when the short message type identifier is not transferred in S450, in S460, the SMSF determines the short message type identifier.

In a possible implementation, after receiving the AF identifier, the SMSF determines, based on the AF identifier, to query subscription data in the UDM, and determines the short message type identifier.

In another possible implementation, the security analysis network element has a configuration table. As shown in Table 3, after receiving the AF identifier, the SMSF queries the security analysis network element for the short message type based on the AF identifier.

**Table 3**

| AF identifier | Short message type | Type description |
|---|---|---|
| 10690001 | 1 | Verification code type |
| 10650001 | 1 and 2 | Verification code type and marketing type |

S470: The AF is triggered to send the short message to the terminal by using a downlink short message procedure, and the SMS-SC may obtain the AF identifier.

Specifically, a procedure of triggering the short message by the AF is shown in FIG. 6.

S480: After receiving the short message, the terminal sends reception confirmation information to the SMSF, where the reception confirmation information includes the identity of the terminal, ULI, and an identifier of a device used by the terminal.

S490: After receiving the ULI, the SMSF detects a type identifier of the corresponding short message; and if the type identifier indicates that detection needs to be performed, performs accumulation on a current suspected abnormal short message counter of the ULI.

In a possible implementation, the SMSF locally maintains a table of suspected abnormal terminals. A possible example is shown in Table 4. The identifier of the device used by the terminal is an IMEISV. It should be understood that in this embodiment of this application, the identifier of the device used by the terminal may alternatively be an IMEI or an operating system activation code. This is not limited in this application.

**Table 4**

| No. | ULI name | Count of the current suspected short messages | Short message type identifier | Terminal list | IMEISV list |
|---|---|---|---|---|---|
| 1 | ULI1 | 3 | 1 | SUPI1 | IMEISV1 |
| | | | | SUPI2 | IMEISV2 |
| | | | | SUPI3 | IMEISV3 |
| 2 | ULI2 | 10 | 0 | SUPI1 | IMEISV1 |
| | | | | SUPI4 | IMEISV4 |
| ... | ... | ... | ... | ... | ... |

S4100: When a suspected short message counter of ULI exceeds a threshold, the SMSF sends a ULI abnormality event to the security analysis network element, where sent content includes the ULI, the short message type identifier, a list of triggered SUPIs, a list of identifiers of triggered devices, and a short message count during triggering.

In a possible implementation, the sent content further includes the AF identifier.

Optionally, in S4110, the security analysis network element determines, by determining the short message type identifier, a registration type of the AF, and whether a triggered terminal is in a trustlist, whether identification needs to be continued.

Optionally, S4120: The security analysis network element updates a detection rule of the SMSF.

For example, after receiving reported information, the security analysis network element determines, based on preconfigured information, that a quantity of pieces of reported information is too large or too small, and the security analysis network element determines that statistics collection on specified ULI needs to be changed. The security analysis network element may update the detection rule, and send the ULI and ULI in a trustlist to the SMSF.

In a possible implementation, the security analysis network element further sends the AF identifier to the SMSF.

In another possible implementation, the security analysis network element further sends the short message type identifier to the SMSF.

After receiving the update, the SMSF performs targeted operations. The specific operations are as follows: If the ULI and the short message type identifier are received, the SMSF collects statistics on a new short message type of the ULI; if the ULI in the trustlist is received, the SMSF sends a short message whose geographical location is that of the ULI in the trustlist, and does not collect statistics on the related short message subsequently; or if the ULI and the AF identifier are received, the SMSF counts suspected short messages for the ULI and the AF identifier.

S4130: The security analysis network element analyzes and determines the information reported by the SMSF. Each time after receiving the report from the SMSF, the security analysis network element comprehensively determines whether there is a cluster short message receiving and sending system in the ULI by analyzing a quantity of switching times of device identifiers of a same SUPI, regularity of identifiers of devices used by the terminals, a quantity of SUPIs, a total quantity of short messages triggered per unit time, and the like, where the regularity of the identifiers of the devices used by the terminals may refer to at least one of the following: all device identifiers are the same, the device identifiers are equally spaced and continuous in an interval, and the device identifiers are repeatedly arranged in the interval.

S4140: When the security analysis network element determines that the ULI is a cluster abnormality location, the security analysis network element sends a corresponding terminal SUPI list to the SMSF, and recommends that the SMSF restrict short message rights of a terminal in the SUPI list, to restrict receiving and sending of the short message.

Optionally, in S4150, the security analysis network element stores a ULI address in the UDM, to recommend that the SMSF restrict subsequent short message service registration of the terminal in the area.

In this embodiment of this application, a passive triggering form is used. In an AF triggered short message procedure, a cluster-deployed receiving platform in which a short message of an AF triggered-type (for example, a verification code type) is received abnormally and that may exist at an access location (ULI) in a network is detected in real time by using newly added signaling and a newly added parameter. In addition, it may be recommended that a network restrict short message receiving and sending of a related terminal in real time or restrict subsequent short message service registration at the access location.

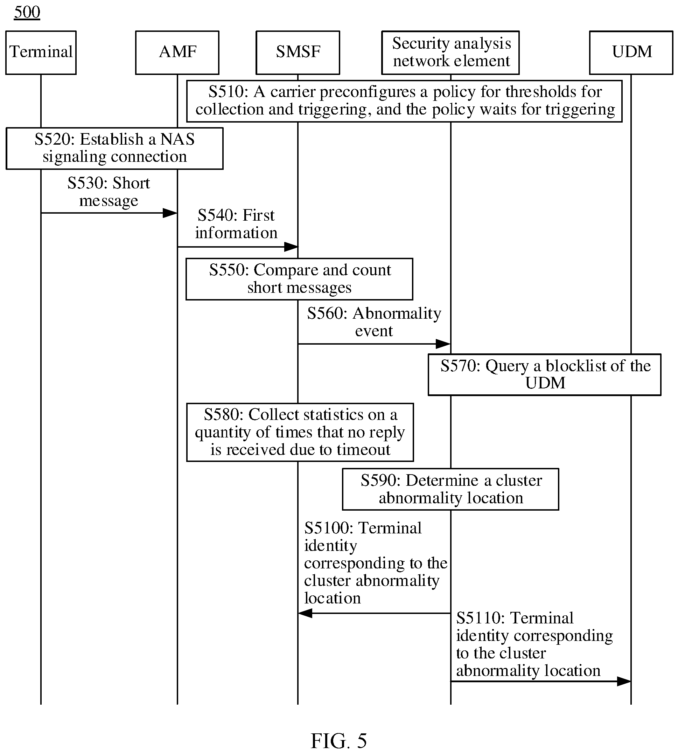

FIG. 5 is a schematic flowchart of cluster abnormality detection according to an embodiment of this application. It should be understood that, for ease of description, detected information in this embodiment of this application is a short message, and a specific form of the information is not limited in this application.

S510: A carrier configures, in a preconfiguration manner for an SMSF and a security analysis network element, a policy for thresholds for collection and triggering, and the policy waits for triggering. The threshold is a threshold for triggering reporting, and how to specifically configure the policy is not within the discussion scope of this application.

S520: A terminal establishes a NAS signaling connection to an AMF.

S530: The terminal sends the short message to the AMF.

Specifically, the terminal constructs a to-be-sent short message, where the short message includes an CP-DATA/RP-DATA/TPDU/SMS-SUBMIT part, the short message is encapsulated in a NAS message, and the NAS message is for short message transmission. The terminal sends the NAS message to the AMF.

S540: The AMF sends first information to an SMSF, where the first information includes an identity of the terminal sending the short message, content of the short message, and an identifier of a device used by the terminal sending the short message, and the first information includes location information of the terminal sending the short message, an SMS size, and an SMS hash. The identifier of the device used by the terminal identifies a device that sends the short message, and may be an IMEI, an IMEISV, or an activation information identifier of an operating system of a mobile device. This is not limited in this application. The SMS size indicates a volume of the short message, or may be understood as a length. The SMS hash indicates a hash value of the short message, and is for determining whether content the short message is consistent.

S550: After receiving a new short message based on the SMS hash, the SMSF compares and counts the SMS hash and the SMS size.

Specifically, first, the SMS size may exclude some short and repeated normal short messages often sent by a common terminal, such as "good", "TD", and "OK", to prevent misjudgment. Therefore, the SMSF can collect statistics on only short messages whose SMS size exceeds a specific value. The SMSF maintains a table locally, and collects statistics in unit time. An example content is shown in Table 5 below.

**Table 5**

| No. | Hash value (hash) | Occurrences | ULI list | SUPI list | IMEISV list |
|---|---|---|---|---|---|
| 0 | hash 1 | 24 | ULI1 | SUPI1 | IMEISV1 |
| | | | ULI2 | SUPI2 | IMEISV2 |
| | | | | SUPI3 | |
| | | | | SUPI4 | |
| 1 | hash2 | 12 | ULI1 | SUPI1 | IMEISV1 |
| | | | ULI2 | SUPI2 | IMEISV2 |
| | | | ULI3 | | IMEISV3 |
| | | | ULI4 | | IMEISV4 |
| 2 | hash3 | 25 | ULI2 | SUPI1 | IMEISV1 |
| | | | | | IMEISV2 |

S560: If within the unit time, the size and the hash satisfy a specific condition, the SMSF reports an abnormality event corresponding to the SMS hash to a security analysis network element. For example, reported content includes but is not limited to (SMS hash, SUPI list, IMEISV list, and ULI list).

In a possible implementation, in S570, after receiving the reported SMS hash, the security analysis network element queries the UDM whether the SMS hash is in a blocklist, and uses whether the SMS hash is in the blocklist as a basis for subsequent determining.

Optionally, in S580, the SMSF collects statistics on each SUPI as a unit, and sets a "timer (timer)". To be specific, after sending an uplink short message, the SMSF waits for a network side to reply to a peer end submit report (submit report) within threshold time. If no report is received within the threshold time, in this case, accumulation is performed on a counter indicating that no response is received for the SUPI, and the SMSF should maintain a table. A possible example is shown in Table 6.

**Table 6**

| No. | SUPI | Quantity of times of sending short messages | Quantity of times that no response is received due to timeout | Time threshold | No. |
|---|---|---|---|---|---|
| 0 | SUPI1 | 24 | 1 | T₁ | 0 |
| 1 | SUPI2 | 12 | 0 | T₁ | 1 |
| 2 | SUPI3 | 25 | 23 | T₁ | 2 |
| 3 | ... | ... | ... | ... | 3 |

When the counted "quantity of times that no response is received due to timeout" reaches a threshold, the SMSF reports an event to the security analysis network element.

It should be noted that there is no sequence relationship between S580, S550, and S570. In other words, whether S580 or S550 is performed first is not limited in this application.

S590: The security analysis network element comprehensively determines, based on a quantity of SUPIs sending the same SMS hash, regularity of identifiers of devices used by the terminals, whether ULI sent by different SUPIs of the same SMS hash is the same, a total quantity of short messages triggered per unit time, and the like, whether ULI has a cluster short message sending platform, and if a quantity of entries each time exceeds a specific threshold, the security analysis network element determines that the ULI is a cluster abnormality location. The identifiers of the devices used by the terminals may be an IMEI, an IMEISV, or an activation information identifier of an operating system of a mobile device. The regularity of the identifiers of the devices used by the terminals may refer to at least one of the following: all device identifiers are the same, the device identifiers are equally spaced and continuous in an interval, and the device identifiers are repeatedly arranged in the interval.

S5100: The security analysis network element sends, to the SMSF, a list of SUPIs of all the SMS hashes, to restrict communication of short message session rights of the SUPI(s).

Optionally, in S5110, the SMSF stores a cluster ULI address in the UDM, stores the SMS hash value in the UDM, and restricts subsequent short message service registration of the terminal at the ULI location.

In this embodiment of this application, a passive triggering form is used. In a procedure in which the terminal normally sends the uplink short message, a cluster-deployed receiving platform in which a short message is sent abnormally and that may exist at an access location (ULI) in a network is detected in real time. In addition, it may be recommended that a network restrict short message receiving and sending of a related terminal in real time or restrict subsequent short message service registration at the access location.

FIG. 6 is a schematic flowchart of triggering a short message by an AF according to an embodiment of this application.

S610: The AF determines a necessary condition for triggering a device.

S620: The AF sends trigger request information to a network exposure function (network exposure function, NEF) network element, where the trigger request information is for requesting to trigger a short message.

S630: The NEF sends identifier conversion request information to a UDM, where the identifier conversion request information is for requesting to parse a GPSI into an SUPI, and the identifier conversion request information includes the GPSI and an AF identifier.

S640: The UDM performs identifier conversion.

S650: The UDM sends identifier conversion response information to the NEF, where the identifier conversion response information includes an SUPI corresponding to the GPSI.

S660: The NEF sends retrieval request information to the UDM, where the retrieval request information is for requesting to retrieve an SMSF, and the retrieval request information includes the GPSI and the short message.

S670: The UDM performs retrieval to obtain an SMSF identifier.

S680: The UDM sends retrieval response information to the NEF, where the retrieval response information includes the SMSF identifier.

S690: The NEF determines an appropriate SMS-SC based on configuration information.

S6100: The NEF sends submit trigger information to the SMS-SC, where the submit trigger information includes the GPSI, the SUPI, the AF identifier, a trigger reference number, a validity period, a priority, an SMSF serving node ID, a short message application port number, trigger load, and a trigger indication. If the NEF indicates that an "absent subscriber" is received from the UDM, the SMS-SC should not submit the information, but should store the information directly, send routing information for the short message, and request the UDM to add an SMS-SC address to an information waiting list.

S6110: The SMS-SC sends submit trigger confirmation information to the NEF to confirm that submission of the short message has been accepted by the SMS-SC.

S6120: The NEF sends trigger response information to the AF, to indicate whether a device trigger request has been accepted to be transferred to a terminal.

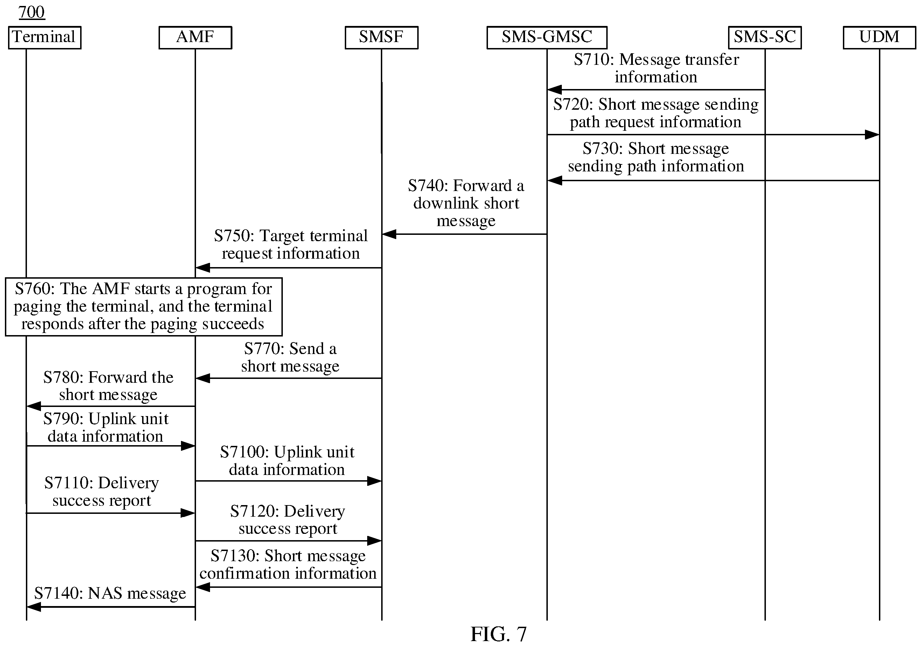

S6130: The SMS-SC sends a downlink short message. Specific sending steps are shown in FIG. 7.

S6140: If the message fails to be delivered (due to a direct cause or expiration of the validity period of the trigger message) or the message is delivered successfully, the SMS-SC should send a message delivery report (a cause code, the trigger reference number, and the AF identifier) to the NEF.

S6150: The NEF provides a notification message to the AF, where the notification message includes a transfer report (for example, a successful result, an unknown result, or a failure, and a cause of the failure) indicating a trigger delivery result. The NEF generates a necessary charging data request record, including the GPSI and AF identifier.

S6160: The terminal takes a specific action in response to a received device trigger, and may consider triggering content of a payload. This operation usually includes communicating with the AF immediately or later.

FIG. 7 is a schematic flowchart of sending a downlink short message according to an embodiment of this application.

S710: An SMS-SC sends message transfer (message transfer) information to a short message service-gateway mobile switching center (short message service-gateway mobile switching center, SMS-GMSC).

S720: The SMS-GMSC sends short message sending path request information to a UDM.

S730: The UDM sends short message sending path information to the SMS-GMSC.

If a terminal has two AMFs, one for 3GPP access and the other for non-3GPP access, a UDM/UDR stores two SMSF addresses. The UDM should return the two SMSF addresses.

S740: The SMS-GMSC forwards the downlink short message to an SMSF.

S750: The SMSF sends target terminal request information to the AMF, to request to find a target terminal to which the short message is to be sent, where requested signaling may be Namf_MT_EnableReachability_Req or any other message, and this is not limited in this application.

S760: The AMF starts a program for paging the terminal, and the terminal responds after the paging succeeds.

S770: The SMSF sends the short message to the AMF, where the short message includes an CPDATA/RPDATA/TPDU/DELIVER part.

S780: The AMF forwards the short message to the terminal.

S790: The terminal sends uplink unit data information to the AMF.

S7100: The AMF forwards the message to the SMSF. To allow the SMSF to create accurate charging records, the AMF also carries an IMEISV, current location information (ULI) of the terminal, and a local time zone (time zone) if the short message is delivered to the terminal through the 3GPP access.

S7110: The terminal returns a delivery success report to the AMF, where the delivery report is encapsulated in a NAS message.

S7120: The AMF forwards the delivery success report to the SMSF.

S7130: The SMSF sends short message confirmation information to the AMF.

S7140: The AMF encapsulates the short message by using the NAS message, and sends the short message to the terminal.

It should be noted that, if the SMSF has a plurality of short message segments to be sent, the SMSF and the AMF forward the subsequent short message/short message confirmation/delivery report in the same manner as steps S760 to S7140. If the SMSF knows that the short message confirmation information is the last group of messages to be transmitted for the terminal, the SMSF should indicate the last message, so that the AMF knows that there is no short message data to be forwarded to the terminal anymore.

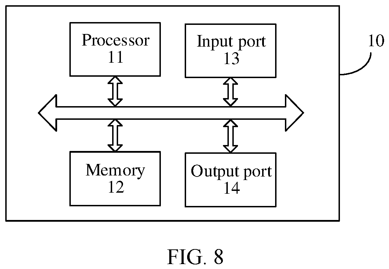

FIG. 8 is a diagram of a communication apparatus 10 according to an embodiment of this application. As shown in FIG. 8, the apparatus 10 may be a device participating in detecting abnormal short message receiving and sending, for example, the foregoing network device, SMSF network element, and security analysis network element, or may be a chip or a circuit, for example, a chip or a circuit that may be disposed on the device participating in detecting abnormal short message receiving and sending.

The apparatus 10 may include a processor 11 (that is, an example of a processing unit) and a memory 12. The memory 12 is configured to store instructions, and the processor 11 is configured to execute the instructions stored in the memory 12, to enable the apparatus 10 to implement the steps performed by the device for detecting abnormal short message receiving and sending in the corresponding methods in FIG. 2 to FIG. 7.

Further, the apparatus 10 may further include an input port 13 (that is, an example of a communication unit) and an output port 14 (that is, another example of the communication unit). Further, the processor 11, the memory 12, the input port 13, and the output port 14 may communicate with each other through an internal connection path, to transfer a control and/or data signal. The memory 12 is configured to store a computer program. The processor 11 may be configured to invoke the computer program from the memory 12 and run the computer program, to control the input port 13 to receive a signal, and control the output port 14 to send a signal, to implement the steps performed by the terminal device in the foregoing methods. The memory 12 may be integrated into the processor 11, or the memory 12 and the processor 11 may be disposed separately.

Optionally, if the communication apparatus 10 is a communication device, the input port 13 is a receiver, and the output port 14 is a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 10 is a chip or a circuit, the input port 13 is an input interface, and the output port 14 is an output interface.

In an implementation, it may be considered that functions of the input port 13 and the output port 14 are implemented by using a transceiver circuit or a dedicated transceiver chip. It may be considered that the processor 11 is implemented by using a dedicated processing chip, a processing circuit, a processor, or a general-purpose chip.

In another implementation, it may be considered that the communication device provided in this embodiment of this application is implemented by using a general-purpose computer. To be specific, program code for implementing functions of the processor 11, the input port 13, and the output port 14 is stored in the memory 12, and a general-purpose processor implements the functions of the processor 11, the input port 13, and the output port 14 by executing the code in the memory 12.

Modules or units in the communication apparatus 10 may be configured to perform the actions or processing processes performed by the device (for example, the network device) for detecting abnormal short message receiving and sending in the foregoing methods. To avoid repetition, detailed descriptions are omitted herein.

For concepts, explanations, detailed descriptions, and other steps of the apparatus 10 that are related to the technical solutions provided in embodiments of this application, refer to the descriptions of the content in the foregoing methods or other embodiments. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a network device, at least one piece of location information based on at least one piece of first information in a plurality of pieces of information, wherein each piece of information corresponds to at least one terminal, a destination terminal of each piece of information is a terminal corresponding to the information, one piece of first information corresponds to at least one piece of location information, and location information corresponding to one piece of first information indicates a location of a destination terminal of the first information; and
determining at least one first location range based on the location information, wherein
a quantity of first terminals in the first location range is greater than or equal to a first threshold, wherein the first terminal is a destination terminal of the at least one piece of first information;
a quantity of pieces of second information in the plurality of pieces of information is greater than or equal to a second threshold, wherein the second information is information for which a destination terminal is located in the first location range in the at least one piece of first information;
a quantity of pieces of third information in the plurality of pieces of information is greater than or equal to a third threshold, wherein the third information is information for which a destination terminal is located in the first location range in the at least one piece of first information, and a length of the third information satisfies a first preset condition; and/or
a quantity of first devices in the first location range is greater than or equal to a fourth threshold, wherein the first device is a device corresponding to the destination terminal of the at least one piece of first information, and a device identifier of the first device satisfies a second preset condition.

2. The method according to claim 1, wherein the method further comprises:
receiving or generating the plurality of pieces of information.

3. The method according to claim 1 or 2, wherein the first preset condition comprises that lengths of the plurality of pieces of information satisfy a length of a preconfigured value.

4. The method according to any one of claims 1 to 3, wherein the second preset condition comprises at least one of the following: all device identifiers are the same, the device identifiers are equally spaced and continuous in an interval, and the device identifiers are repeatedly arranged in the interval.

5. The method according to any one of claims 1 to 4, wherein the first information is a part of the plurality of pieces of information.

6. The method according to any one of claims 1 to 5, wherein the information comprises a short message and information sent by a terminal application, and the information is for verification, notification, marketing, or chatting.

7. The method according to any one of claims 1 to 6, wherein the first information is information whose length is greater than or equal to a fifth threshold in the plurality of pieces of information.

8. The method according to any one of claims 1 to 7, wherein the first information is information that is in the plurality of pieces of information and that is sent by a first application function network element to the destination terminal.

9. The method according to claim 8, wherein the first information is a first type of information in the plurality of pieces of information, the first type is a type of information corresponding to the first application function network element, and one application function network element corresponds to a type of at least one piece of information.

10. The method according to any one of claims 1 to 9, wherein the method further comprises:
generating, by the network device, alarm information, wherein the alarm information indicates that abnormality occurs in the first location range;
forbidding, by the network device, forwarding a part or all of the plurality of pieces of information to a terminal in the first location range; or
forbidding, by the network device, sending information to a terminal in the first location range.

11. A communication method, comprising:
obtaining, by a network device, at least one piece of location information based on at least one piece of first information in a plurality of pieces of information, wherein each piece of information corresponds to at least one terminal, a sending terminal of each piece of information is a terminal corresponding to the information, one piece of first information corresponds to at least one piece of location information, and location information corresponding to one piece of first information indicates a location of a sending terminal of the first information; and
determining at least one first location range based on the location information, wherein
a quantity of first terminals in the first location range is greater than or equal to a first threshold, wherein the first terminal is a sending terminal of the at least one piece of first information;
a quantity of pieces of second information in the plurality of pieces of information is greater than or equal to a second threshold, wherein the second information is information for which a sending terminal is located in the first location range in the at least one piece of first information;
a quantity of pieces of third information in the plurality of pieces of information is greater than or equal to a third threshold, wherein the third information is information for which a sending terminal is located in the first location range in the at least one piece of first information, and a length of the third information satisfies a first preset condition; and/or
a quantity of first devices in the first location range is greater than or equal to a fourth threshold, wherein the first device is a device corresponding to the sending terminal of the at least one piece of first information, and a device identifier of the first device satisfies a second preset condition.

12. The method according to claim 11, wherein the method further comprises:
receiving or generating the plurality of pieces of information.

13. The method according to claim 11 or 12, wherein the first preset condition comprises that lengths of the plurality of pieces of information satisfy a length of a preconfigured value.

14. The method according to any one of claims 11 to 13, wherein the second preset condition comprises at least one of the following: all device identifiers are the same, the device identifiers are equally spaced and continuous in an interval, and the device identifiers are repeatedly arranged in the interval.

15. The method according to any one of claims 11 to 14, wherein the first information is a part of the plurality of pieces of information.

16. The method according to any one of claims 11 to 15, wherein the information comprises a short message and information sent by a terminal application, and the information is for verification, notification, marketing, or chatting.

17. The method according to any one of claims 11 to 16, wherein the first information is information whose length is greater than or equal to a fifth threshold in the plurality of pieces of information.

18. The method according to any one of claims 11 to 17, wherein the first information is information whose hash value is a first value in the plurality of pieces of information.

19. The method according to any one of claims 11 to 18, wherein the first information is information that a first quantity of times of the sending terminal is greater than or equal to a sixth threshold and that is in the plurality of pieces of information, and the first quantity of times indicates a quantity of times that the sending terminal does not receive a reply after sending information.

20. The method according to claim 19, wherein the method further comprises:
starting, by the network device, a timer when forwarding the information from the sending terminal, and if the timer expires and the network device does not receive a submit report, performing accumulation on a counter corresponding to the sending terminal to obtain the first quantity of times.

21. The method according to any one of claims 11 to 20, wherein the method further comprises:
generating, by the network device, alarm information, wherein the alarm information indicates that abnormality occurs in the first location range;
forbidding, by the network device, forwarding a part or all of the plurality of pieces of information for a terminal in the first location range; or
forbidding, by the network device, a terminal in the first location range to send information.

22. A communication system, comprising:
a first network device and a second network device, wherein
the first network device is configured to send a plurality of pieces of information to the second network device;
the second network device is configured to obtain at least one piece of location information based on at least one piece of first information in the plurality of pieces of information, wherein each piece of information corresponds to at least one terminal, one piece of first information corresponds to at least one piece of location information, and location information corresponding to one piece of first information indicates a location of a terminal corresponding to the first information; and
the second network device is further configured to determine at least one first location range based on the location information, wherein
a quantity of first terminals in the first location range is greater than or equal to a first threshold, wherein the first terminal is a terminal corresponding to the at least one piece of first information;
a quantity of pieces of second information in the plurality of pieces of information is greater than or equal to a second threshold, wherein the second information is information for which a terminal is located in the first location range in the at least one piece of first information;
a quantity of pieces of third information in the plurality of pieces of information is greater than or equal to a third threshold, wherein the third information is information for which a terminal is located in the first location range in the at least one piece of first information, and a length of the third information satisfies a first preset condition; and/or
a quantity of first devices in the first location range is greater than or equal to a fourth threshold, wherein the first device is a device corresponding to the terminal corresponding to the at least one piece of first information, and a device identifier of the first device satisfies a second preset condition.

23. The system according to claim 22, wherein the first network device is further configured to receive or generate the plurality of pieces of information.

24. The system according to claim 22 or 23, wherein before the first network device sends the plurality of pieces of information to the second network device, the second network device sends first request information to the first network device, wherein the first request information is for requesting the plurality of pieces of information from the first network device.

25. The system according to claim 24, wherein before sending the first request information to the first network device, the second network device receives second request information, wherein the second request information is for requesting the second network device to determine the first location range; and
the second request information comprises a second type and/or a second location range.

26. A communication apparatus, comprising:
a processing module, configured to obtain at least one piece of location information based on at least one piece of first information in a plurality of pieces of information, wherein each piece of information corresponds to at least one terminal, a destination terminal of each piece of information is a terminal corresponding to the information, one piece of first information corresponds to at least one piece of location information, and location information corresponding to one piece of first information indicates a location of a destination terminal of the first information, wherein
the processing module is further configured to determine at least one first location range based on the location information, wherein
a quantity of first terminals in the first location range is greater than or equal to a first threshold, wherein the first terminal is a destination terminal of the at least one piece of first information;
a quantity of pieces of second information in the plurality of pieces of information is greater than or equal to a second threshold, wherein the second information is information for which a destination terminal is located in the first location range in the at least one piece of first information;
a quantity of pieces of third information in the plurality of pieces of information is greater than or equal to a third threshold, wherein the third information is information for which a destination terminal is located in the first location range in the at least one piece of first information, and a length of the third information satisfies a first preset condition; and/or
a quantity of first devices in the first location range is greater than or equal to a fourth threshold, wherein the first device is a device corresponding to the destination terminal of the at least one piece of first information, and a device identifier of the first device satisfies a second preset condition.

27. A communication apparatus, comprising:
a processing module, configured to obtain at least one piece of location information based on at least one of a plurality of pieces of information, wherein each piece of information corresponds to at least one terminal, a sending terminal of each piece of information is a terminal corresponding to the information, one piece of information corresponds to at least one piece of location information, and location information corresponding to one piece of information indicates a location of a sending terminal of the information, wherein
the processing module is further configured to determine at least one first location range based on the location information, wherein
a quantity of first terminals in the first location range is greater than or equal to a first threshold, wherein the first terminal is a sending terminal of the at least one piece of first information;
a quantity of pieces of second information in the plurality of pieces of information is greater than or equal to a second threshold, wherein the second information is information for which a sending terminal is located in the first location range in the at least one piece of first information;
a quantity of pieces of third information in the plurality of pieces of information is greater than or equal to a third threshold, wherein the third information is information for which a sending terminal is located in the first location range in the at least one piece of first information, and a length of the third information satisfies a first preset condition; and/or
a quantity of first devices in the first location range is greater than or equal to a fourth threshold, wherein the first device is a device corresponding to the sending terminal of the at least one piece of first information, and a device identifier of the first device satisfies a second preset condition.

28. A communication apparatus, comprising:
a processor, configured to execute a computer program stored in a memory, to enable the communication apparatus to perform the communication method according to any one of claims 1 to 21.

29. A computer-readable storage medium, wherein the computer-readable storage medium stores a computer program, and when the computer program is run on a computer, the computer is enabled to perform the communication method according to any one of claims 1 to 21.

30. A chip system, comprising a processor, configured to invoke a computer program from a memory and run the computer program, to enable a communication device on which the chip system is installed to perform the communication method according to any one of claims 1 to 21.
